# DEMANDE DE BREVET EUROPEEN

(11) **EP 1 449 907 A1**
(43) Date de publication de la demande: **25.08.2004**
(21) Numéro de dépôt: 04290329.4
(22) Date de dépôt: 09.02.2004
(51) Int. Cl.: C10J 3/54, C10J 3/56, C10J 3/46, C10J 3/48

(54) **Installation et procédé de gazéification multi-étapes d'une charge comprenant de la matière organique**

(30) Priorité: 24.02.2003 FR 0302252
(71) Demandeur: Institut Français du Pétrole, 92852 Rueil-Malmaison Cedex (FR); COMMISSARIAT A L'ENERGIE ATOMIQUE, 75015 Paris (FR)
(72) Inventeur: Bayle, Jérôme, 69007 Lyon (FR); Marty, Eric, 69005 Lyon (FR)

(57) **Abrégé**

- Installation pour la production de gaz de synthèse à partir d'une charge solide comprenant de la matière organique, ladite installation comprenant des moyens de circulation d'un solide caloporteur fournissant la chaleur nécessaire à ladite production et plusieurs étages comprenant des moyens de gazéification (Z1, Z3), des moyens intermédiaires de séparation (Z2, Z4) des effluents issus de chaque étage et des moyens de combustion (Z5).
- Procédé de mise en oeuvre de l'installation.

## Description

La présente invention concerne une installation et un procédé pour la production d'un gaz de synthèse à partir d'une charge solide comprenant de la matière organique, typiquement la biomasse.

La production d'un gaz de synthèse combustible à partir d'une charge solide contenant une fraction organique peut se faire par pyrolyse (aussi appelée thermolyse) ou par gazéification selon des procédés connus, par exemple tels que ceux décrits dans les demandes de brevets EP0692677 et EP1077248.

Ces opérations permettent, de façon connue, la valorisation des charges comprenant au moins en partie de la matière organique telles que la biomasse, les déchets industriels ou ménagers, les boues industrielles ou de station d'épuration.

Comme cela est connu, la pyrolyse (ou thermolyse) est une opération de dégradation thermique qui se déroule en absence d'air donc d'oxygène et conduisant à la formation d'une phase gazeuse et d'un résidu solide. La gazéification correspond à une oxydation partielle de la charge, oxydation qui peut être réalisée jusqu'à la conversion presque totale de la charge, c'est-à-dire réalisée dans des conditions telles qu'elle ne produit qu'une phase gazeuse et une fraction très faible de résidus solides.

Les deux opérations conduisent à la production d'un gaz de synthèse combustible à fort ou moyen pouvoir calorifique et pouvant servir de combustible dans des procédés connus de production d'énergie comme les chaudières, les moteurs, les turbines. En outre, lorsque la qualité du gaz et notamment sa teneur en monoxyde de carbone et en hydrogène le permet, ce gaz peut aussi servir de réactifs pour des processus de synthèse ou de transformation, par exemple dans le cadre de la synthèse Fisher-Tropsch, de la synthèse de méthanol, de la production d'hydrogène.

Les réactions de gazéification ou de thermolyse sont fortement endothermiques. Pour fournir l'énergie nécessaire à la réaction, il est connu d'utiliser, par exemple, l'énergie fournie par la combustion soit de la partie solide issue du procédé de thermolyse, soit du résidu solide résultant du procédé de gazéification incomplète de la charge initiale.

Le transfert d'énergie peut être direct, c'est-à-dire que ledit solide alimente des brûleurs qui servent à chauffer l'enveloppe du four de thermolyse ou de gazéification, tel que décrit dans le brevet US 4,300,915.

Une telle réalisation est cependant difficile à mettre en oeuvre, notamment en raison de la mauvaise qualité de ce combustible.

Selon une autre voie possible, le transfert d'énergie peut être indirect et un vecteur de chaleur, encore appelé caloporteur, est utilisé.

En particulier, il est possible d'utiliser des particules solides, qui peuvent être catalytiques, selon des principes comparables à ceux utilisés pour le craquage catalytique en lit fluidisé. Un tel exemple de réalisation est par exemple donné dans le brevet US 5,494,653 dans lequel des particules solides catalytiques facilitant la réaction sont ensuite régénérées dans un réacteur de combustion, le solide à haute température étant ensuite réinjecté dans l'enceinte de gazéification et jouant ainsi le rôle de vecteur de chaleur de la réaction.

Une telle disposition, si l'on veut obtenir des conversions et des rendements acceptables en un gaz de synthèse présentant un pouvoir calorifique acceptable, amène cependant à des volumes de réaction très importants et des coûts de fabrication de l'installation correspondante très élevés.

Plusieurs solutions ont été proposées pour obtenir des rendements élevés de gazéification ou de pyrolyse.

Par exemple le brevet US 4,077,778 propose un procédé de conversion complète de la charge par mise en oeuvre de deux lits fluidisés denses successifs, avec des temps de séjour de la charge au sein de chaque lit de l'ordre de plusieurs heures.

Selon un autre exemple, le brevet US 5,961,786 propose une ultrapyrolyse, c'est-à-dire une pyrolyse effectuée avec des temps de séjours très courts, de l'ordre, voire inférieurs à la seconde pour améliorer la qualité du gaz de synthèse obtenu finalement.

La demande internationale WO 00/06671 divulgue une autre solution, selon laquelle le gaz de synthèse issu d'une zone de pyrolyse est brûlé et la chaleur de combustion permet de fournir l'énergie nécessaire à une étape ultérieure de gazéification du résidu solide issu de ladite zone.

Aucune de ces solutions connues ne permet cependant d'obtenir de façon satisfaisante et concomitante :
- une conversion profonde de la charge initiale,
- une capacité globale de l'installation pouvant être de quelques tonnes à quelques dizaines de tonnes par heure,
- un gaz de synthèse à fort pouvoir calorifique, présentant un taux élevé de monoxyde de carbone et d'hydrogène,
- un bilan thermique satisfaisant,
- des volumes réactionnels raisonnables, c'est-à-dire compatibles avec une application industrielle.

Selon l'invention, une installation pour la production de gaz de synthèse à partir d'une charge solide comprenant de la matière organique, ladite installation comprenant des moyens de circulation d'un solide caloporteur fournissant au moins une partie de la chaleur nécessaire à ladite production, une zone Z1 comprenant des moyens de pyrolyse et de gazéification, une zone Z2 comprenant des moyens de séparation, une zone Z3 comprenant des moyens de gazéification, une zone Z4 comprenant des moyens de séparation et une zone Z5 comprenant des moyens de combustion, est caractérisée en ce que la zone Z1 comprend des moyens de pyrolyse et de gazéification de ladite charge en lit fluidisé transporté, en ce que la zone Z2 comprend des moyens de séparation au moins partielle des effluents de la zone Z1 en une phase essentiellement gazeuse et en une phase essentiellement solide, en ce que la zone Z3 est alimentée au moins en partie par ladite phase essentiellement solide et comprend des moyens de gazéification en lit fluidisé dense de ladite phase essentiellement solide, en ce que la zone Z4 comprend des moyens de séparation des effluents issus de la zone Z3 en une phase essentiellement gazeuse et en une phase essentiellement solide et en ce que la zone Z5 comprend des moyens de combustion de la phase essentiellement solide issue de la zone Z3 et des moyens de transfert du solide caloporteur issu de ladite combustion dans la zone Z1.

La zone Z5 peut comprendre des moyens de combustion de la phase essentiellement solide issue de la zone Z4.

La zone de pyrolyse/gazéification Z1 peut comprendre des moyens d'alimentation en un gaz vecteur réactif, des moyens d'introduction de ladite charge et des moyens d'injection du solide caloporteur.

La zone de combustion Z5 peut comprendre des moyens d'introduction d'un gaz oxydant et des moyens de transfert du solide caloporteur issu de ladite combustion dans la zone Z1.

L'installation peut comprendre des moyens de transfert de la phase essentiellement gazeuse issue de la zone de séparation Z2 vers la zone de séparation Z4.

La zone de combustion Z5 peut comprendre :
- une première zone Z'5 comprenant des moyens de combustion en lit fluidisé transporté d'une partie de la phase essentiellement solide issue de la zone Z3 et/ou Z4,
- une zone Z6 de séparation de la phase gazeuse et de la phase essentiellement solide issue de ladite combustion,
- une zone Z7 comprenant des moyens de combustion en lit fluidisé dense de la phase essentiellement solide issue de la zone Z6 et des moyens de transfert du solide caloporteur issu de ladite combustion dans la zone Z1.

La zone de gazéification Z3 peut comprendre des moyens d'alimentation en gaz vecteur réactif.

La zone de gazéification Z3 peut comprendre des moyens d'introduction de la charge.

La zone de combustion Z5 peut comprendre des moyens d'alimentation en un combustible complémentaire.

L'invention concerne également un procédé permettant la mise en oeuvre de l'installation, ledit procédé comprenant :
- une étape de traitement en lit fluidisé transporté d'une charge solide comprenant de la matière organique dans des conditions de pyrolyse et de gazéification,
- une étape de séparation au moins partielle du gaz de synthèse et de la phase solide issus de ladite étape de fluidisation en lit transporté,
- une étape de traitement en lit fluidisé dense de ladite phase solide issue de l'étape de séparation dans des conditions de gazéification,
- une étape de séparation au moins partielle du gaz de synthèse et de la phase solide issus de ladite étape de fluidisation en lit dense,
- une étape de combustion de la phase solide issue de l'étape de séparation,
- une étape de recyclage dudit solide caloporteur régénéré dans ladite étape de traitement en lit fluidisé transporté.

L'étape de traitement en lit fluidisé transporté peut être réalisée en présence d'un gaz vecteur réagissant avec ladite charge et d'un solide caloporteur chaud.

L'étape de combustion peut être réalisée dans des conditions permettant de porter le solide caloporteur régénéré contenu dans la phase solide à une température comprise entre 700 et 1100 °C.

Le solide caloporteur peut comprendre au moins un élément sélectionné dans le groupe constitué par les minerais de type dolomie, mica, olivine, trona, borax, bentonite ou leurs dérivés, un support inerte imprégné par des sels métalliques ou par des sels alcalins ou alcalino-terreux, les silices alumine présentant un caractère acide.

La charge peut présenter une granulométrie comprise entre 0,1 et 100 mm.

Le gaz vecteur réactif des zones de gazéification peut comprendre de la vapeur d'eau ou du dioxyde de carbone ou un mélange de ces deux composés.

Le gaz réactif peut comprendre de l'hydrogène et/ ou du méthane et/ou du monoxyde de carbone.

La température des étapes de traitement en lit fluidisé transporté et en lit fluidisé dense peut être comprise entre 600 et 1000°C, la température de l'étape de combustion peut être comprise entre 800 et 1200°C et le rapport massique initial entre le gaz vecteur réactif et la charge peut être compris entre 0,1 et 5.

Le temps de séjour moyen des particules solides à l'intérieur du lit fluidisé transporté peut être compris entre 0,5 et 20 secondes, bornes incluses et le temps de séjour moyen des particules solides à l'intérieur du lit fluidisé dense peut être compris entre 30 secondes et une heure, bornes incluses.

La charge peut être sélectionnée dans le groupe constitué par la biomasse, les déchets ménagers et/ou industriels, les boues de station d'épuration ou industrielles, les résidus et sous-produits agricoles, les terres polluées par les hydrocarbures.

D'autres avantages, détails, caractéristiques de l'invention apparaîtront mieux à la lecture de la description de deux modes de réalisation, fournis à titre illustratif et nullement limitatif, en référence avec :
- la figure 1 qui montre schématiquement une installation de gazéification selon l'invention et
- la figure 2 qui montre de manière schématique une variante la figure 1.

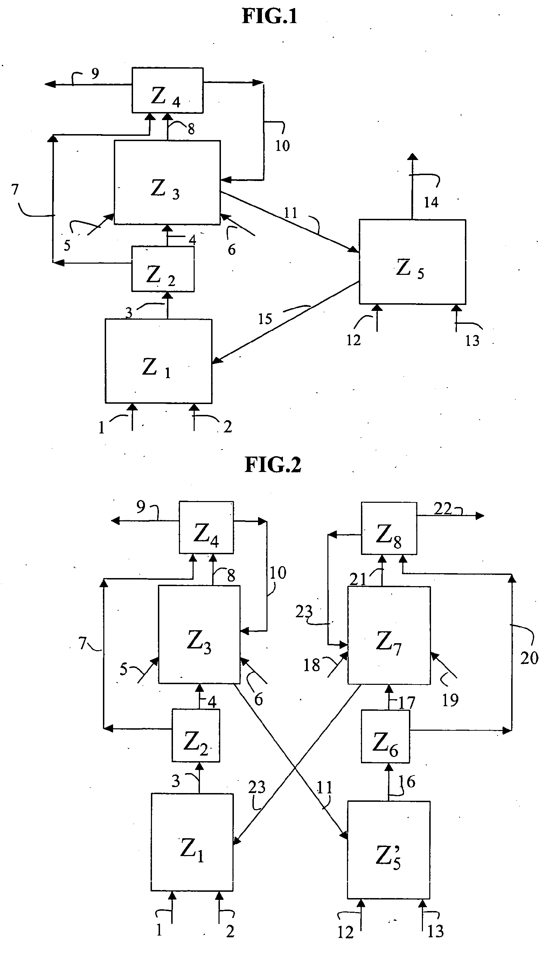

Le schéma de l'installation selon l'invention telle que présentée sur la figure 1 comprend cinq zones distinctes :
- une zone Z1 de pyrolyse et de gazéification comprenant un réacteur tubulaire fonctionnant selon les principes d'un lit fluidisé transporté,
- deux zones de séparation Z2 et Z4 entre une phase gazeuse et une phase solide,
- une zone de gazéification Z3 comprenant un réacteur fonctionnant selon les principes d'un lit fluidisé dense,
- une zone de combustion Z5.

Dans la zone Z1 est effectuée une pyrolyse et une gazéification partielle de la charge comprenant au moins en partie de la matière organique, telle que la biomasse, les déchets industriels ou ménagers, les boues industrielles ou de station d'épuration. La charge est constituée de particules dont le diamètre moyen est compris entre 0,1 et 100 mm, préférentiellement entre 0,5 et 10 mm.

Ladite pyrolyse/gazéification est effectuée dans un réacteur tubulaire fonctionnant selon les principes d'un lit fluidisé transporté. Par lit fluidisé transporté, il est entendu au sens de la présente description que la vitesse ascensionnelle des gaz, mesurée par le rapport entre le débit de gaz vecteur introduit et la section du réacteur, est supérieure à la vitesse terminale de chute dans le réacteur de la fraction des particules ayant le diamètre le plus élevé. Au sein dudit lit fluidisé transporté, les particules solides sont entraînées avec la charge par un gaz vecteur réactif réagissant le plus souvent avec la charge, tel que la vapeur d'eau, seule ou en mélange avec un autre gaz tel que du CO₂, du CO, du H₂ ou du CH₄. Sans sortir du cadre de l'invention, ledit gaz vecteur réactif peut être du CO₂, seul ou en mélange avec de la vapeur d'eau ou un autre gaz, tel que du CO, du H₂ ou du CH₄. En général et de manière à obtenir au final un gaz de synthèse à fort pouvoir calorifique, la teneur en gaz oxydant, par exemple l'oxygène ou l'air, devra être minimisée et, en tout état de cause, sera avantageusement inférieure à 10% molaire, voire inférieure à 5% molaire. Le réacteur tubulaire présente en outre un gradient de températures, la température maximale dudit réacteur étant comprise entre 600 et 1000°C, de préférence entre 700 et 950°C et la différence de température entre les deux extrémités du réacteur étant comprise entre 50 et 250°C. En outre, des particules chaudes de solide caloporteur issues de la zone de combustion Z5 sont injectées à l'extrémité la plus chaude du réacteur, en mélange avec le gaz vecteur réactif et la charge, et permettent ainsi l'établissement dudit gradient.

La charge contenant de la matière organique est introduite par des moyens 1 avec un réactif gazeux introduit par des moyens 2 dans un lit fluidisé transporté de solide caloporteur.

Le solide caloporteur peut correspondre de manière non exhaustive à un minerai naturel ou un mélange de minerais naturels, éventuellement mis en forme, de type dolomie, mica, olivine, bentonite, trona, borax, ou autres dérivés, ou à un support de type inerte (sable, silice) ou actif (alumine, dolomie, olivine, charbon) pouvant contenir des éléments métalliques (Ni, Cu, Fe, Zn ou autres), ou par des composés contenant des sels alcalins ou alcalino-terreux. Ledit solide caloporteur peut comprendre une silice alumine présentant un caractère acide, de préférence telle que celles utilisées dans les procédés de craquage en lit fluidisé (FCC) de conversion des résidus lourds issus de la distillation du pétrole. Le plus souvent, ledit réactif gazeux est constitué de vapeur d'eau, de dioxyde de carbone ou d'un gaz comprenant un fort taux d'au moins l'un de ces gaz.

Le rapport massique initial, c'est-à-dire en entrée de la zone Z1, entre le réactif gazeux et la charge peut être compris entre 0,1 et 5, de préférence entre 0,4 et 1. En fonction de la taille des particules solides injectées (de charge et/ou de solide caloporteur), les conditions d'introduction des fluides et particulièrement du gaz vecteur sont généralement ajustées pour que la vitesse superficielle d'introduction des gaz à l'intérieur du réacteur tubulaire soit comprise entre 1,5 et 25 m/s et préférentiellement entre 4 et 10 m/s. Ces deux flux peuvent être introduits ensemble ou distinctement dans la zone Z1, avec ou sans étagement. La zone Z1 peut comprendre un ou plusieurs réacteurs tubulaires verticaux, la progression des fluides se faisant selon l'invention préférentiellement en mode ascendant. On ne sortira cependant pas de cadre de l'invention si ladite progression était mise en oeuvre en mode descendant, par exemple selon des principes similaires à ceux décrits dans le brevet US 6,296,812.

Dans une configuration typique en mode ascendant, le taux de vide dans la zone inférieure initiale d'injection de la charge organique mesurant la densité de particules solides dans l'écoulement est typiquement compris entre 50 et 98%, de manière préférée entre 70 et 95%. Toujours dans le cas d'une configuration en mode ascendant, l'écoulement est beaucoup plus dilué dans la partie aval du réacteur du fait notamment des réactions qui génèrent une importante expansion volumique des gaz. Le taux de vide dans la partie supérieure du réacteur est ainsi typiquement compris entre 80 et 99,9%, de manière préférée entre 95 et 99,9%. L'utilisation d'un réacteur tubulaire fonctionnant selon les principes d'un lit fluidisé transporté permet en outre une pression partielle en gaz vecteur, par exemple en vapeur d'eau, maximale en entrée de réacteur, c'est à dire proche de 100%. Selon un mode de réalisation préféré de l'invention dans lequel le gaz vecteur comprend au moins 90% voire au moins 95% molaire d'eau, ladite pression partielle en eau permet avantageusement une production accrue de gaz de synthèse tout au long du réacteur, de part son incidence sur la cinétique des réactions de gazéification des résidus et de craquage des goudrons issus de la pyrolyse.

Il a pu être ainsi constaté par le demandeur que l'application des conditions précédemment décrites favorise dans la zone Z1 :
- dans une partie inférieure du réacteur, la formation par pyrolyse d'un gaz de synthèse à haut pouvoir calorifique ainsi que la formation d'un résidu carboné très réactif
- dans une partie supérieure dudit réacteur, une gazéification partielle dudit résidu carboné issu de la pyrolyse sous l'action de la vapeur d'eau ainsi que le craquage de la majeure partie des goudrons générés par l'étape de pyrolyse
- la sélectivité du procédé : le processus réactionnel de la zone Z1 se caractérise par sa sélectivité c'est-à-dire qu'il permet avantageusement d'obtenir ainsi un gaz de synthèse présentant un très bon pouvoir calorifique ainsi qu'un taux élevé en oxyde de carbone et en hydrogène.

Les conditions expérimentales et les vitesses ascensionnelles des gaz peuvent être ajustées selon toute technique connue de telle façon que les temps de séjour de la charge à l'intérieur dudit réacteur en lit transporté soient de l'ordre de 0,5 à 20 secondes et de préférence de l'ordre de 2 à 10 secondes.

Des moyens de séparation gaz-solide Z2 alimentés par une ligne 3 permettent de séparer les effluents issus de la zone Z1. Tout moyen connu de séparation de gaz et de solide peut être utilisé selon l'invention. Par exemple, il est possible d'utiliser un séparateur de type centrifuge tel que décrit par le brevet EP 1017762.

Les moyens de séparation compris dans la zone Z2 permettent d'évacuer au moins une partie des composés gazeux, ou gaz de synthèse, par une ligne 7 de sortie des gaz. Selon la configuration hydrodynamique du séparateur, par exemple suivant que la sortie solide est immergée ou non dans le lit fluidisé de la zone Z3, l'efficacité de la séparation gaz/solide pourra être modulable, ce qui permet d'augmenter la flexibilité du procédé. Dans une configuration préférée où la sortie solide du séparateur est immergée, une fraction généralement réduite de gaz comprise entre 2 et 15% molaire de gaz est entraînée dans la sortie solide du séparateur, c'est-à-dire par la ligne 4, avec la phase solide constituée par le solide caloporteur et les résidus solides carbonés. Dans une configuration où la sortie solide du séparateur est non immergée, une fraction importante de gaz, comprise entre 15% et 90% molaire, de préférence de 15 à 70% molaire, est entraînée dans la sortie solide du séparateur par la ligne 4. La fraction essentiellement gazeuse récupérée en sortie de la zone Z2 est évacuée directement par la ligne 7, avantageusement reliée à la zone Z4. La majeure partie de la phase solide contenant des résidus solides et des particules de solide caloporteur issue de ladite séparation est envoyée dans une zone de gazéification Z3 par la ligne 4. En général, le taux de la séparation est limité par les performances des dispositifs utilisés et on préférera utiliser un équipement connu pour effectuer une séparation efficace, par exemple des séparateurs du type centrifuge. A titre d'exemple, la séparation en masse de la phase solide dans la zone Z2 peut être comprise entre 50 et 99%, généralement entre 75 et 95%, c'est-à-dire qu'entre 75% et 95% du solide entre dans la zone Z3 par la ligne 4. La fraction mineure de la phase solide est évacuée par la ligne 7 de sortie des composés gazeux.

La zone Z3 correspond à une zone de gazéification opérée en lit fluidisé dense. Par lit fluidisé dense, il est entendu au sens de la présente description un lit de particules denses pour lequel la vitesse superficielle des gaz dans le réacteur est inférieure à la vitesse terminale de chute dans le réacteur de la fraction des particules ayant le diamètre le plus élevé mais supérieure à la vitesse superficielle de gaz nécessaire pour obtenir une fluidisation suffisante du lit. En règle générale ladite vitesse sera au moins 2 à 10 fois la vitesse minimale de fluidisation du mélange des particules solides. Par exemple, la vitesse superficielle du gaz dans le lit fluidisé pourra être comprise entre 0,1 et 1,5 m/s, préférentiellement entre 0,3 et 1 m/s.

Par exemple, le taux de vide dudit lit fluidisé dense peut être compris entre 40 et 60%, préférentiellement entre 45 et 55%. Typiquement, la fraction de particules solides entraînée par élutriation peut être comprise entre 0,5 et 20 kg de solide par mètre cube de gaz, typiquement de l'ordre de 3 à 15 kg de solide par mètre cube de gaz.

Ladite zone Z3 permet de mettre en oeuvre des réactions de gazéification dans des conditions favorisant une forte conversion des résidus solides carbonés issus de la zone Z1 en gaz de synthèse par gazéification, par exemple pouvant être comprise entre 30 et 99%, préférentiellement entre 40 et 60% de la masse de résidu solide entrant dans ladite zone. Sans sortir du cadre de l'invention, un complément de charge contenant de la matière organique peut être introduit dans la zone Z3 par des moyens 5, de même qu'un complément de réactif gazeux par des moyens 6. Le réactif gazeux est généralement de même nature que celui de la zone Z1 peut contenir préférentiellement une majorité d'eau. Ladite introduction peut être effectuée selon l'invention avec ou sans étagement. Suivant les taux de conversion désirés de la charge et le rendement en gaz de synthèse désiré, les temps de séjour des résidus solides à l'intérieur de la zone Z3 de réaction sont en général compris entre 20 secondes et une heure, de préférence entre 2 et 6 minutes. La température de gazéification est uniforme au sein du lit fluidisé dense et généralement comprise entre 600 et 1000°C, de préférence comprise entre 700 et 900 °C. Dans la zone Z3, les réactions de gazéification des résidus solides carbonés sont des réactions essentiellement hétérogènes avec des temps de séjours et des conditions expérimentales, notamment un taux de rétention du solide, permettant un bon contact entre les réactifs en phase solide et en phase gazeuse et une conversion importante du résidu solide.

Les effluents gazeux issus de la zone Z3 sont traités dans la zone Z4 via la ligne 8 avec les composés gazeux issus de la ligne 7 de la zone de séparation Z2. La zone Z4 correspond à un deuxième dispositif de séparation gaz-solide généralement de type cyclonique. Ledit dispositif permet de limiter l'entraînement de particules solides dans la sortie finale du gaz de synthèse et de recycler par une ligne 10 la phase solide entraînée (résidu solide carboné et solide caloporteur) dans la zone Z3 alors que le gaz de synthèse est évacué vers tout moyen connu par la ligne 9.

Des moyens de transfert 11 permettent de transférer le solide caloporteur usé et la fraction du résidu solide carboné non convertie en gaz de synthèse de la zone Z3 vers une zone de combustion Z5. Sans sortir du cadre de l'invention, ledit transfert pourra également au moins en partie être effectué de la zone Z4 vers la zone Z5.

Dans la zone de combustion Z5, un réactif gazeux 12 comprenant un gaz oxydant tel que l'air, de l'air enrichi en oxygène ou de l'oxygène est introduit selon toute technique appropriée étagée ou non de combustion. Ce réactif gazeux 12 peut également contenir une certaine quantité de vapeur d'eau afin par exemple d'accélérer les cinétiques de combustion des résidus carbonés.

Selon un mode préféré de réalisation de l'invention, la conversion du résidu carboné dans les zones Z1 et Z3 sera optimisée pour que la combustion (exothermique) de la partie non convertie dudit résidu solide carboné ainsi que des éventuels dépôts de coke sur le solide caloporteur fournisse au moins en partie, et de préférence sensiblement la totalité, de l'énergie nécessaire aux réactions fortement endothermiques de pyrolyse/gazéification et de gazéification se produisant dans les zones Z1 et Z3. La température au sein de la zone Z5 est généralement comprise entre 800°C et 1200°C.

Sans sortir du cadre de l'invention, par exemple lorsque les besoins thermiques et le rendement massique en gaz de synthèse sont importants, un complément de combustible du type fraction de la charge initiale organique, biomasse, résidus hydrocarbonés, fuel ou gaz légers de type méthane peut en outre être introduit par une ligne 13 pour satisfaire les contraintes du bilan thermique global de l'installation. Les deux flux (réactif gazeux et appoint de combustible) peuvent être introduits ensemble ou distinctement dans la zone Z5, avec ou sans étagement. Les fumées de combustion sont évacuées par la ligne 14 après éventuellement passage dans des dispositifs de séparation gaz-solide intermédiaires (non représentés). Le solide caloporteur chaud issu de ladite combustion dont la température est en général comprise entre 700 et 1100°C, de préférence entre 800 et 1000°C, est ensuite recyclé dans la zone Z1 de gazéification par des moyens de transfert 15.

Le mode de réalisation de l'invention tel qu'il vient d'être décrit permet d'illustrer les avantages résultants de la présente combinaison.

En particulier, le procédé selon l'invention (et l'installation correspondante) propose une solution originale et avantageuse permettant une conversion importante de débits importants d'une charge solide comprenant de la matière organique à granulométrie typiquement comprise entre 0,1 et 100 mm (millimètre), dans des volumes de réactions permettant une exploitation industrielle.
Plus précisément, le procédé selon l'invention permet
1 °) une conversion importante de la charge initiale comprenant de la matière organique, c'est à dire à des taux compris entre 60% et 99%,
2°) la production d'un gaz de synthèse de bonne qualité, c'est-à-dire présentant un pouvoir calorique élevé et un taux important d'oxyde de carbone et d'hydrogène,
3°) une taille réduite de l'installation, compatible avec une application industrielle,
4°) un bilan thermique de l'installation très favorable, puisque l'énergie nécessaire aux réactions endothermiques des opérations de pyrolyse/gazéification est fournie en partie, essentiellement, voire en totalité par la combustion du résidu carboné,
5°) une flexibilité opératoire importante permettant par exemple d'ajuster le bilan thermique de l'unité, par la variation des conditions expérimentales en fonction des besoins, notamment lors du réglage de l'installation; il est en outre possible d'obtenir différents degrés de conversion ou une qualité ou un débit en gaz de synthèse variables, les degrés de liberté dans le fonctionnement de l'installation étant notamment fournis par :
   - la possibilité d'injecter une quantité variable de gaz réactif dans chacune des zones de réaction Z1 ou Z3 et de moduler ainsi le pourcentage de la fraction de résidus carbonés non convertis et envoyée dans la zone de combustion Z5,
   - la possibilité de faire varier les temps de séjour respectifs des réactifs solides et gazeux dans chacune desdites zones de réaction, de façon à ajuster les taux de conversion au sein de chacune de celles-ci,
   - la possibilité de faire une injection de la charge directement au sein de chacune des zones de réaction Z1 et Z3 par exemple pour déplacer le bilan thermique de l'installation en augmentant la masse de résidu solide dans la zone de combustion,
   - la possibilité de modifier la séparation des effluents gaz et solide dans la zone de séparation Z2.

La figure 2 décrit un autre mode de réalisation de l'invention différant de celui précédemment décrit en relation avec la figure 1 par une disposition particulière de la zone de combustion. Plus précisément, la zone de combustion est subdivisée en deux zones de combustion Z'5 et Z7 et comprend en plus deux zones de séparation Z6 et Z8.

Dans ce mode de réalisation, les moyens de transfert 11 permettent de transférer la phase solide contenant le solide caloporteur et le résidu carboné non converti en gaz de synthèse de la zone Z3 vers la première zone de combustion Z'5. Un réactif gazeux 12 contenant un gaz oxydant choisi de préférence parmi l'air, l'air enrichi en oxygène ou l'oxygène ou un mélange de ces différents composés avec de la vapeur d'eau est introduit de manière étagée ou non dans la zone de combustion Z'5. Un complément de charge hydrocarbonée de type fraction de charge organique, biomasse, résidu hydrocarboné, fuel ou gaz légers de type CH4 peut être introduit par des moyens 13 pour satisfaire les contraintes de bilan thermique, notamment lorsque le rendement en gaz de synthèse et/ou la conversion de la charge initiale doit être élevée. Ces deux flux peuvent être introduits ensemble ou distinctement dans la zone Z'5 avec ou sans étagement. Une forme préférentielle de la zone Z'5 comprend au moins un réacteur tubulaire vertical ascendant ou descendant.

Des moyens de séparation, par exemple du type centrifuge, permettent d'en séparer les effluents. Lesdits moyens sont compris dans une zone Z6 placée en aval et reliée par des moyens 16 à la zone Z'5. Après séparation, la majeure partie des résidus solides et du résidu caloporteur est envoyée dans une zone distincte de combustion Z7 par des moyens 17. L'efficacité de la séparation de la phase solide sera typiquement comprise entre 50 et 100%, plus spécifiquement entre 75 et 95%. Les moyens de séparation de la zone Z6 permettent d'évacuer la phase essentiellement gazeuse par une ligne 20. En général, entre 30 et 100% du gaz entrant dans la zone Z6 est évacué directement par la ligne 20, le reste des effluents gazeux étant entraîné avec la phase solide par les moyens 17. La zone Z7 correspond à une zone secondaire de combustion opérée de manière préférentielle en lit fluidisé dense afin de compléter les réactions de combustion des résidus solides. Un réactif gazeux de même type que celui introduit dans la zone Z'5 peut être injecté de manière étagée ou non dans la zone de combustion Z7 par des moyens 18. Un complément de combustible sous la forme de charge hydrocarbonée de type fraction de charge organique initiale, biomasse, résidus hydrocarbonés, fuel ou gaz légers de type CH4 peut éventuellement être introduit par des moyens 19 pour amener les particules de solide caloporteur à la température désirée, généralement comprise entre 750 et 1200°C, préférentiellement entre 850 et 1000°C. Ces deux flux (réactif gazeux et complément de charge) peuvent être introduits ensemble ou séparément dans la zone Z7, avec ou sans étagement.

Les effluents gazeux transférés de la zone Z7 par des moyens 21 sont mélangés dans la zone Z8 avec les effluents gazeux issus de la ligne 20 et de la zone de séparation Z6. La zone Z8 comprend un dispositif de séparation gaz-solide permettant de limiter l'entraînement de particules solides dans la sortie commune 22 des fumées de combustion et de recycler une majeure partie des solides entraînés dans la zone Z7 par des moyens 23.

Des moyens de transfert 23 permettent finalement de transférer le solide caloporteur réchauffé et, lorsque celui présente une activité catalytique, régénéré vers la zone Z1 de pyrolyse/gazéifiation.

Par ailleurs, selon une technique bien connue de l'art antérieur et sans sortir du cadre de l'invention, des moyens de remplacement périodique d'une partie de l'inventaire en solide caloporteur peuvent être prévus par exemple au niveau des zones de lits fluidisés denses Z5 (figure 1) Z3, Z'5 ou Z7 (figure 2). Des dispositifs d'extraction des cendres de fond de ces différents lits peuvent également être incorporés.

### Exemple 1 (selon l'art antérieur)

Cet exemple est basé sur la modélisation informatique d'une installation (configuration A) de conversion de la biomasse en gaz de synthèse conforme au schéma présenté dans la figure 3 du brevet US 5,494,653. Ladite modélisation a été réalisée par le logiciel Pro Il commercialisé par la société SIMSCI. Ladite installation comporte une zone de gazéification en lit fluidisé dense de la biomasse par de la vapeur d'eau en présence d'un solide caloporteur et une zone de combustion dudit solide. De manière à équilibrer le bilan thermique entre les zones de combustion et de gazéification, 67% de la biomasse est introduite dans la zone de gazéification et 33% dans la zone de combustion.

Le solide utilisé est un minéral du type olivine présentant une activité catalytique et dont les performances de conversion de la biomasse sont connues *(1rst World conférence on biomass for energy and industry, Seville 5-9 juin 2000, page 1999-2001, James et James (Science Publishers) Ltd).*

Les calculs sont effectués pour une installation ayant une capacité de 100 tonnes par heure de biomasse sur base sèche, opérant à 0,4 MPa (mégapascals). La biomasse correspond à de la sciure de bois dont les particules solides présente un diamètre compris entre 1 et 4 mm et un ratio UD (longueur sur diamètre) compris entre 1 et 3.

La biomasse est introduite dans la zone de gazéification avec une humidité relative de 10% en présence de vapeur d'eau surchauffée à 500°C, la proportion initiale d'eau introduite étant de 0,47 kg d'eau par kg de biomasse sèche.

La biomasse est mise en contact avec le solide caloporteur catalytique issu de la zone de combustion dans un rapport massique solide sur biomasse, en entrée de la zone de gazéification, de 30,1. Le débit de solide caloporteur dans l'installation est de 33,7 tonnes/minute. Le choix de telles conditions permet d'assurer l'équilibre thermique entre la zone exothermique de combustion et la zone endothermique de gazéification.

Ledit solide est introduit dans la zone de gazéification à une température de 950°C. La température des fluides en sortie de la zone de gazéification est de 800°C.

La masse de résidu solide non converti en sortie de la zone de gazéification est égale à 4,9% du poids initial de la charge initialement introduite sur base sèche.

La composition des gaz en sortie des zones de gazéification et de combustion (combusteur) est donnée par le tableau 1.

**Tableau 1 :**

| Composition finale des gaz | | |
|---|---|---|
| Composition volumique | Gaz de synthèse sortie gazéifieur | Fumées sortie combusteur |
| Teneur en eau (% vol) | 17.2 | 14 |
| Teneur en H2 (% vol) | 38.9 | 0 |
| Teneur en CO (% vol) | 18.9 | 1 |
| Teneur en CO2 (% vol) | 17.2 | 16 |
| Teneur en C2- (% vol) | 4.5 | 0 |
| Teneur en goudrons (% vol) | 0.1 | 0 |
| Teneur en N2 (% vol) | 2.9 | 67 |
| Teneur en 02 (% vol) | 0 | 3 |
| | 100 | 100 |

### Exemple 2 (selon l'invention)

Une simulation informatique sur la base de l'installation décrite en relation avec la figure 2 est réalisée. Les zones de gazéification (ou de pryrolyse/gazéification) et de combustion sont chacune subdivisées en deux zones distinctes. La première zone correspond à un lit fluidisé transporté et la deuxième zone correspond à un lit fluidisé dense. Ces deux zones sont séparées par des séparateurs centrifuges gaz-solide tels que décrits par le brevet US 5,055,177. L'efficacité de la séparation gaz/solide est telle que 85% de la masse de la partie solide issue de la première zone passe dans la deuxième zone et que 96 % molaire du gaz de synthèse produit dans la première zone est récupéré, le reste étant transféré avec la partie solide vers la deuxième zone. La charge, le solide caloporteur, la capacité de l'installation, la proportion totale d'eau introduite dans le gazéifieur, le débit de solide dans l'installation sont les mêmes que ceux de l'exemple 1. Côté gazéification, l'intégralité de la biomasse est introduite en entrée du lit fluidisé transporté ainsi que 60% de la vapeur d'eau totale injectée dans les zones étagées de gazéification. Le complément de vapeur d'eau est injecté en entrée du lit fluidisé dense de la deuxième zone de gazéification. Côté combustion, l'intégralité de la biomasse est introduite en entrée du lit fluidisé transporté ainsi que 80% de l'air total de combustion. Le complément d'air est injecté en entrée du lit fluidisé dense de la deuxième zone de combustion.

Le rapport massique solide sur biomasse en entrée de la première zone de gazéification est de 30,1. Le solide caloporteur est introduit dans la première zone de gazéification à une température de 950°C. La température des fluides en sortie de la deuxième zone de gazéification est de 800°C. La composition des gaz finalement obtenue est similaire à celle répertoriée dans le tableau 1.

### Exemple 3 (comparatif)

Cet exemple permet de montrer, pour des bilans de matière et thermique semblables (isoconversion et même capacité), le gain substantiel occasionné par la réduction du volume réactionnel si la configuration B selon l'invention est mise en oeuvre.

Dans les conditions préalablement décrites, le diamètre des lits fluidisés denses des configurations A et B (deuxième zone de gazéification et deuxième zone de combustion) est optimisé selon des critères connus de vitesse superficielle de gaz en sortie de réacteur. Pour limiter l'entraînement de la phase solide en phase diluée et les phénomènes d'attrition mécanique du catalyseur, il est en effet nécessaire pour chaque configuration de limiter la vitesse superficielle des gaz dans les lits fluidisés. Dans une zone de gazéification, la limite est ainsi fixée à 0,4 m/s, et dans une zone de combustion fixée à 0,6 m/s.

De même, le diamètre optimal des lits fluidisés transportés de la configuration B (première zone de gazéification et première zone de combustion) a été déterminé par des critères bien connus de l'homme de l'art de flux solides et de vitesse superficielle du gaz. En particulier, pour éviter les instabilités d'écoulement, la vitesse superficielle du gaz doit être supérieure à la vitesse de chocking (selon le terme anglo-saxon habituellement utilisé par l'homme de métier) et le flux solide doit être ajusté pour maximiser le contact entre les réactifs. Le choix retenu correspond à une vitesse au bas des lits transportés de 8 m/s et un flux solide de 400 kg/m²/s en zone de gazéification (respectivement 13 m/s et 170 kg/m²/s en zone de combustion). Dans ces conditions, les dimensions géométriques calculées des zones de gazéification /combustion sont indiquées dans le tableau 2 :

**Tableau 2 :**

| dimensionnement géométrique des zones de gazéification / combustion | | |
|---|---|---|
| **Géométrie** | **Configuration A** | **Configuration B (selon l'invention)** |
| Etagement des zones | Non | Oui |

| *Zone de gazéification* | | |
|---|---|---|
| Diamètre initial du lit transporté (mètres) | (-) | 1,3 |
| Diamètre du lit fluidisé dense (mètres) | 11,9 | 4,0 |

| *Zone de combustion* | | |
|---|---|---|
| Diamètre initial du lit transporté (mètres) | (-) | 2,0 |
| Diamètre du lit fluidisé dense (mètres) | 12,9 | 5,6z |

Comme on le constate sur le tableau ci-dessus, la configuration B selon l'invention permet de réduire sensiblement le diamètre des équipements nécessaire pour atteindre un niveau de conversion et une capacité identique. Le diamètre du lit fluidisé de gazéification est ainsi réduit par un facteur proche de 3, le diamètre de la zone de combustion par un facteur supérieur à 2. Une telle réduction permet de réduire très largement le coût d'investissement des équipements.

## Revendications

1. Installation pour la production de gaz de synthèse à partir d'une charge solide comprenant de la matière organique, ladite installation comprenant des moyens de circulation d'un solide caloporteur fournissant au moins une partie de la chaleur nécessaire à ladite production, une zone Z1 comprenant des moyens de pyrolyse et de gazéification, une zone Z2 comprenant des moyens de séparation, une zone Z3 comprenant des moyens de gazéification, une zone Z4 comprenant des moyens de séparation et une zone Z5 comprenant des moyens de combustion, **caractérisée en ce que** la zone Z1 comprend des moyens de pyrolyse et de gazéification de ladite charge en lit fluidisé transporté, **en ce que** la zone Z2 comprend des moyens de séparation au moins partielle des effluents de la zone Z1 en une phase essentiellement gazeuse et en une phase essentiellement solide, **en ce que** la zone Z3 est alimentée au moins en partie par ladite phase essentiellement solide et comprend des moyens de gazéification en lit fluidisé dense de ladite phase essentiellement solide, **en ce que** la zone Z4 comprend des moyens de séparation des effluents issus de la zone Z3 en une phase essentiellement gazeuse et en une phase essentiellement solide et **en ce que** la zone Z5 comprend des moyens de combustion de la phase essentiellement solide issue de la zone Z3 et des moyens de transfert (15, 22) du solide caloporteur issu de ladite combustion dans la zone Z1.

2. Installation selon la revendication 1 dans laquelle la zone Z5 comprend des moyens de combustion de la phase essentiellement solide issue de la zone Z4.

3. Installation selon la revendication 1 ou 2 dans laquelle ladite zone de pyrolyse/gazéification Z1 comprend des moyens d'alimentation (2) en un gaz vecteur réactif, des moyens d'introduction (1) de ladite charge et des moyens d'injection du solide caloporteur.

4. Installation selon l'une des revendications 1 à 3 dans laquelle ladite zone de combustion Z5 comprend des moyens d'introduction (12, 18) d'un gaz oxydant et des moyens de transfert (15, 23) du solide caloporteur issu de ladite combustion dans la zone Z1.

5. Installation selon l'une des revendications précédentes comprenant des moyens de transfert (7) de la phase essentiellement gazeuse issue de la zone Z2 vers la zone Z4 de séparation.

6. Installation selon l'une des revendications précédentes dans laquelle ladite zone Z5 comprend :
- une première zone Z'5 comprenant des moyens de combustion en lit fluidisé transporté d'une partie de la phase essentiellement solide issue de la zone Z3 et/ou Z4,
- une zone Z6 de séparation de la phase gazeuse et de la phase essentiellement solide issue de ladite combustion,
- une zone Z7 comprenant des moyens de combustion en lit fluidisé dense de la phase essentiellement solide issue de la zone Z6 et des moyens de transfert (23) du solide caloporteur issu de ladite combustion dans la zone Z1.

7. Installation selon l'une des revendications précédentes dans laquelle la zone Z3 comprend des moyens d'alimentation (6) en gaz vecteur réactif.

8. Installation selon l'une des revendications précédentes dans laquelle la zone Z3 comprend des moyens d'introduction (5) de la charge.

9. Installation selon l'une des revendications précédentes dans laquelle ladite zone Z5 comprend des moyens d'alimentation (13, 19) en un combustible complémentaire.

10. Procédé permettant la mise en oeuvre de l'installation selon l'une des revendications précédentes, ledit procédé comprenant :
- une étape de traitement en lit fluidisé transporté d'une charge solide comprenant de la matière organique dans des conditions de pyrolyse et de gazéification,
- une étape de séparation au moins partielle du gaz de synthèse et de la phase solide issus de ladite étape de fluidisation en lit transporté,
- une étape de traitement en lit fluidisé dense de ladite phase solide issue de l'étape de séparation dans des conditions de gazéification,
- une étape de séparation au moins partielle du gaz de synthèse et de la phase solide issus de ladite étape de fluidisation en lit dense,
- une étape de combustion de la phase solide issue de l'étape de séparation,
- une étape de recyclage dudit solide caloporteur régénéré dans ladite étape de traitement en lit fluidisé transporté.

11. Procédé selon la revendication 10 dans lequel l'étape de traitement en lit fluidisé transporté est réalisée en présence d'un gaz vecteur réagissant avec ladite charge et d'un solide caloporteur chaud.

12. Procédé selon la revendication 10 dans lequel ladite étape de combustion est réalisée dans des conditions permettant de porter le solide caloporteur régénéré contenu dans la phase solide à une température comprise entre 700 et 1100 °C.

13. Procédé selon l'une des revendications 10 à 12 dans lequel le solide caloporteur comprend au moins un élément sélectionné dans le groupe constitué par les minerais de type dolomie, mica, olivine, trona, borax, bentonite ou leurs dérivés, un support inerte imprégné par des sels métalliques ou par des sels alcalins ou aicaiino-terreux, les silices alumine présentant un caractère acide.

14. Procédé selon l'une des revendications 10 à 13 dans lequel la charge présente une granulométrie comprise entre 0,1 et 100 mm.

15. Procédé selon l'une des revendications 10 à 14 dans lequel le gaz vecteur réactif des zones de gazéification comprend de la vapeur d'eau ou du dioxyde de carbone ou un mélange de ces deux composés.

16. Procédé selon la revendication 15 dans lequel ledit gaz réactif comprend de l'hydrogène et/ ou du méthane et/ou du monoxyde de carbone.

17. Procédé selon l'une des revendications 10 à 16 dans lequel la température des étapes de traitement en lit fluidisé transporté et en lit fluidisé dense est comprise entre 600 et 1000°C, dans lequel la température de l'étape de combustion est comprise entre 800 et 1200°C et dans lequel le rapport massique initial entre le gaz vecteur réactif et la charge est compris entre 0,1 et 5.

18. Procédé selon l'une des revendications 10 à 17 dans lequel le temps de séjour moyen des particules solides à l'intérieur du lit fluidisé transporté est compris entre 0,5 et 20 secondes, bornes incluses et dans lequel le temps de séjour moyen des particules solides à l'intérieur du lit fluidisé dense est compris entre 30 secondes et une heure, bornes incluses.

19. Procédé selon l'une des revendications 10 à 18 dans lequel ladite charge est sélectionnée dans le groupe constitué par la biomasse, les déchets ménagers et/ou industriels, les boues de station d'épuration ou industrielles, les résidus et sous-produits agricoles, les terres polluées par les hydrocarbures.
